(19) Europäisches Patentamt / European Patent Office / Office européen des brevets

(11) **EP 4 068 026 A1**

(12) **EUROPEAN PATENT APPLICATION**

(43) Date of publication:
**05.10.2022 Bulletin 2022/40**

(21) Application number: **21165987.5**

(22) Date of filing: **30.03.2021**

(51) International Patent Classification (IPC):
***G05B 23/02*** *(2006.01)*

(52) Cooperative Patent Classification (CPC):
**G05B 23/024**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Ltd. China Beijing 100102 (CN)**

(72) Inventors:
• **ZHOU, Lin Fei Beijing, Beijing 100084 (CN)**
• **LIANG, Xiao Beijing, 100082 (CN)**
• **HU, Sheng Bo Suzhou, 215021 (CN)**
• **SCHNEEGASS, Daniel 80637 München (DE)**
• **TIAN, Peng Wei Beijing, 100102 (CN)**

(74) Representative: **Isarpatent Patent- und Rechtsanwälte Barth Charles Hassa Peckmann & Partner mbB Friedrichstrasse 31 80801 München (DE)**

(54) **DATA NOVELTY DETECTION METHOD AND APPARATUS**

(57) The present invention provides a data novelty detection method, where the method includes: receiving to-be-detected data; calculating a separation difficulty value and a local density value of the to-be-detected data based on historical data and the to-be-detected data; calculating an abnormality index value of the to-be-detected data based on the separation difficulty value and the local density value; and determining, based on the abnormality index value, whether the to-be-detected data is novelty data. Compared with the prior art, in the present invention, the abnormality index value of the to-be-detected data is calculated by using the separation difficulty value and the local density value, and whether the to-be-detected data is novelty data is determined based on the abnormality index value, thereby simplifying an operation process and improving accuracy of novelty detection.

Fig. 4

**Description**

**BACKGROUND**

**Technical Field**

The present invention mainly relates to the field of industrial digitization, and in particular, to a data novelty detection method and apparatus.

**Related Art**

In the industrial field, predictive maintenance can be performed on industrial equipment, and a fault can be predicted and processed before the industrial equipment fails, so as to prevent the fault of the industrial equipment from affecting an entire production line, thereby improving stability of the entire production line.

Models are typically trained based on historical operating data of the industrial equipment, and the trained models are then used to evaluate or determine the current state of the industrial equipment, as well as to predict the probability of the fault of the industrial equipment. In theory, developers collect positive samples (normal states) and negative samples (abnormal/faulty states) to train the models; however, in most scenarios, only positive samples are usually collected. A key method of predictive maintenance is to perform novelty detection on the operating data generated by the industrial equipment. If the data generated by the industrial equipment is novelty data, it is presumed that the operating state of the industrial equipment is abnormal; otherwise, it is presumed that the operating state of the industrial equipment is normal.

Currently, there are mainly three types of methods for performing data novelty detection. The first type is a distribution-based method, mainly including the Elliptic Envelope method and the Gaussian Mixture Models method; the second type is a density-based method, mainly including the Local Outlier Factor method; and the third type is a decision function-based method, mainly including the One-class SVM method and the Isolation Forest method. The current novelty detection methods have a complex calculation process and poor accuracy.

**SUMMARY**

To resolve the foregoing technical problem, the present invention provides a data novelty detection method and apparatus, so as to simplify a calculation process of the data novelty detection method and improve accuracy of the novelty detection.

To achieve the foregoing objective, the present invention provides a data novelty detection method, where the method includes: receiving to-be-detected data; calculating a separation difficulty value and a local density value of the to-be-detected data based on historical data and the to-be-detected data; calculating an abnormality index value of the to-be-detected data based on the separation difficulty value and the local density value; and determining, based on the abnormality index value, whether the to-be-detected data is novelty data. Therefore, the abnormality index value of the to-be-detected data is calculated by using the separation difficulty value and the local density value, and whether the to-be-detected data is novelty data is determined based on the abnormality index value, thereby simplifying an operation process and improving accuracy of novelty detection.

In an embodiment of the present invention, the calculating a separation difficulty value and a local density value of the to-be-detected data based on historical data and the to-be-detected data includes: calculating the separation difficulty value of the to-be-detected data based on the historical data and the to-be-detected data by using an R-tree algorithm. Therefore, a calculation manner of the separation difficulty value is provided, which simplifies a calculation process of the separation difficulty value and increases a calculation speed of the separation difficulty value.

In an embodiment of the present invention, the calculating a separation difficulty value and a local density value of the to-be-detected data based on historical data and the to-be-detected data includes: calculating the separation difficulty value of the to-be-detected data based on the historical data and the to-be-detected data by using a K-D tree algorithm. Therefore, a calculation manner of the separation difficulty value is provided, which improves calculation accuracy of the separation difficulty value.

In an embodiment of the present invention, the local density value of the to-be-detected data is calculated based on the historical data and the to-be-detected data by using the following formula:

$$ld(o) = {}^{1}\!/\!{d(o, M(X))}$$

where $ld(o)$ represents the local density value of the to-be-detected data, $M(X)$ represents the centroid of all data in a local area X, and $d(o, M(X))$ represents the distance between the to-be-detected data and the centroid. Therefore, a calculation manner of the local density value is provided, which simplifies a calculation process of the local density value and increases a calculation speed of the local density value.

In an embodiment of the present invention, the separation difficulty value and the local density value are respectively negatively correlated with the abnormality index value.

In an embodiment of the present invention, the abnormality index value of the to-be-detected data is calculated based on the separation difficulty value and the local density value by using the following formula:

$$f(se, ld) = a^{-se*ld/c}$$

where $f(se,ld)$ represents the abnormality index value of the to-be-detected data, se represents the separation difficulty value, ld represents the local density value, a and c are two constants, a>1, and c>0. Therefore, a calculation manner of the abnormality index value is provided, which simplifies a calculation process of the abnormality index value and increases a calculation speed of the abnormality index value.

In an embodiment of the present invention, the determining, based on the abnormality index value, whether the to-be-detected data is novelty data includes: determining an abnormality threshold, and when the abnormality index value of the to-be-detected data is greater than the abnormality threshold, determining that the to-be-detected data is novelty data. Therefore, whether the to-be-detected data is abnormal may be automatically determined by using the abnormality threshold.

The present invention further provides a data novelty detection apparatus, where the apparatus includes: a receiving module, configured to receive to-be-detected data; a first calculation module, configured to calculate a separation difficulty value and a local density value of the to-be-detected data based on historical data and the to-be-detected data; a second calculation module, configured to calculate an abnormality index value of the to-be-detected data based on the separation difficulty value and the local density value; and a determining module, configured to determine, based on the abnormality index value, whether the to-be-detected data is novelty data.

In an embodiment of the present invention, that the first calculation module calculates the separation difficulty value of the to-be-detected data based on the historical data and the to-be-detected data includes: calculating the separation difficulty value of the to-be-detected data based on the historical data and the to-be-detected data by using an R-tree algorithm.

In an embodiment of the present invention, that the first calculation module calculates the separation difficulty value of the to-be-detected data based on the historical data and the to-be-detected data includes: calculating the separation difficulty value of the to-be-detected data based on the historical data and the to-be-detected data by using a K-D tree algorithm.

In an embodiment of the present invention, the first calculation module calculates the local density value of the to-be-detected data based on the historical data and the to-be-detected data by using the following formula:

$$ld(o) = {}^{1}\!/_{d(o, M(X))}$$

where $ld(o)$ represents the local density value of the to-be-detected data, $M(X)$ represents the centroid of all data in a local area X, and $d(o, M(X))$ represents the distance between the to-be-detected data and the centroid.

In an embodiment of the present invention, the separation difficulty value and the local density value are respectively negatively correlated with the abnormality index value.

In an embodiment of the present invention, the second calculation module calculates the abnormality index value of the to-be-detected data based on the separation difficulty value and the local density value by using the following formula:

$$f(se, ld) = a^{-se*ld/c}$$

where $f(se,ld)$ represents the abnormality index value of the to-be-detected data, se represents the separation difficulty value, ld represents the local density value, a and c are two constants, a>1, and c>0.

In an embodiment of the present invention, that the determining module determines, based on the abnormality index value, whether the to-be-detected data is novelty data includes: determining an abnormality threshold, and when the abnormality index value of the to-be-detected data is greater than the abnormality threshold, determining that the to-be-detected data is novelty data.

The present invention also provides an electronic device, including a processor, a memory and instructions stored in the memory, where the instructions, when executed by the processor, implement the method as mentioned above.

The present invention also provides a computer readable storage medium, having computer instructions stored thereon, where the computer instructions, when executed, implement the foregoing method.

## BRIEF DESCRIPTION OF THE DRAWINGS

The following figures are only intended to give schematic illustrations and explanations of the present invention but are not intended to limit a scope of the present invention.

FIG. 1 is a flowchart of a data novelty detection method according to an embodiment of the present invention;

FIG. 2 is a schematic diagram of operating data of industrial equipment according to an embodiment of the present invention;

FIG. 3A and FIG. 3B are schematic diagrams of calculating a separation difficulty value by using an R-tree algorithm according to an embodiment of the present invention;

FIG. 4 is a schematic diagram of calculating a separation difficulty value by using a K-D tree algorithm according to an embodiment of the present invention;

FIG. 5 is a schematic diagram of a calculation function of an abnormality index value according to an embodiment of the present invention;

FIG. 6 is a schematic diagram of result verification of a data novelty detection method according to an embodiment of the present invention;

FIG. 7 is a schematic diagram of a data novelty detection apparatus according to an embodiment of the present invention; and

FIG. 8 is a schematic diagram of an electronic device according to an embodiment of the present invention.

Descriptions of reference numerals:

100 Data novelty detection method

110-140 Steps

700 Data novelty detection apparatus

710 Receiving module

720 First calculation module

730 Second calculation module

740 Determining module

800 Electronic device

810 Processor

820 Memory

**DETAILED DESCRIPTION**

To provide a clearer understanding of the technical features, objectives, and effects of the present invention, specific implementations of the present invention are described with reference to the accompanying drawings.

Many specific details are set forth in the following description to facilitate a full understanding of this application, but this application may alternatively be implemented in other manners different from those described herein and is therefore not limited by specific embodiments disclosed below.

As shown in the present application and the claims, words such as "a/an," "one," "one kind," and/or "the" do not refer specifically to singular forms and may also include plural forms, unless the context expressly indicates an exception. Generally, terms "include" and "comprise" merely indicate including clearly identified steps and elements, and these steps and elements do not constitute an exclusive list. A method or device may also include other steps or elements.

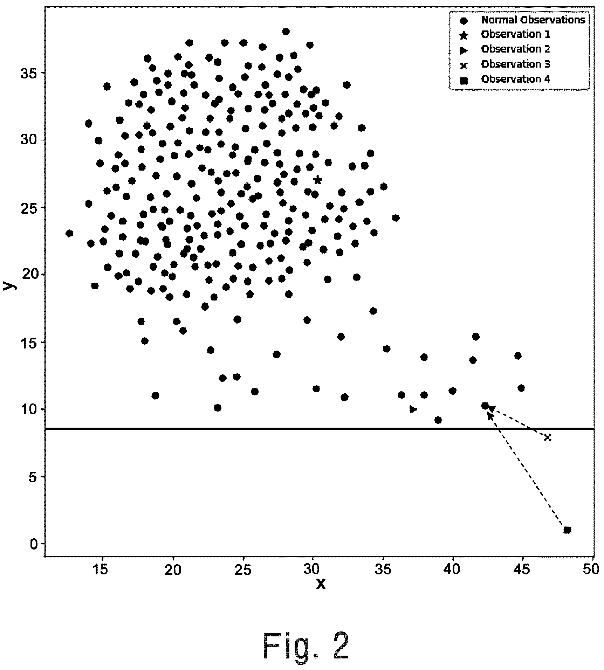

As described in the background, the key method of predictive maintenance is to perform novelty detection on the operating data generated by the industrial equipment. If the data generated by industrial equipment is novelty data, the operating state of the industrial equipment is presumed to be abnormal when operating conditions have not changed; otherwise, the operating state of the industrial equipment is presumed to be normal. FIG. 2 is a schematic diagram of operating data of industrial equipment according to an embodiment of the present invention. As shown in FIG. 2, the operating data of the industrial equipment is two-dimensional data, and horizontal coordinates and vertical coordinates represent two different dimensions, for example, the horizontal coordinates represent temperature, and the vertical coordinates represent humidity. In FIG. 2, a circular point represents historical operating data of the industrial equipment. Generally, these points are positive samples, that is, normal data. A non-circular point represents newly generated operating data of the industrial equipment. Whether the newly generated data is abnormal is determined based on a relationship between the newly generated data and the historical operating data, that is, novelty detection is performed on the newly generated data of the industrial equipment, so as to implement predictive maintenance on the industrial equipment and improve stability of a production line.

FIG. 2 shows four pieces of to-be-detected data. According to experience, it may be determined that to-be-detected data 1 is not novelty data, to-be-detected data 4 is novelty data, and to-be-detected data 2 and to-be-detected data 3 are between novelty data and non-novelty data. Embodiments of the present invention provide a data novelty detection method, so as to simplify a calculation process of data novelty detection and improve accuracy of data novelty detection.

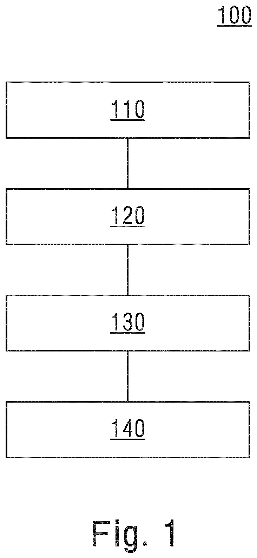

FIG. 1 is a flowchart of a data novelty detection method 100 according to an embodiment of the present invention. As shown in FIG. 1, the data novelty detection method in this embodiment of the present invention includes:
Step 110: Receive to-be-detected data.

In an operating process, industrial equipment continuously generates a large quantity of operating data, and the operating data is used as to-be-detected data to determine whether the data is novelty data. The to-be-detected data may be one-dimensional data, two-dimensional data, three-dimensional data, or more-dimensional data. The dimension of the data may be defined by a user, or may be set automatically by a system. Using the two-dimensional data as an example, two dimensions of the two-dimensional data may be temperature and humidity. The two-dimensional data generated by the industrial equipment may be located in a two-dimensional coordinate system that includes temperature and humidity. Optionally, the to-be-detected data further carries a timestamp, so as to determine a time at which the to-be-detected data is generated, so as to facilitate subsequent data processing and analysis.

Step 120: Calculate a separation difficulty value and a local density value of the to-be-detected data based on historical data and the to-be-detected data.

It is determined, by using a relationship between the to-be-detected data and the historical data, whether the to-be-detected data is novelty data. The relationship between the to-be-detected data and the historical data is represented by using the separation difficulty value and the local density value in this embodiment of the present invention. The separation difficulty value indicates difficulty in separating the to-be-detected data from the historical data. The separation difficulty value may be obtained by using an R-tree algorithm, an R*-tree algorithm, and a B-tree algorithm. The local density value represents a density value of a local area in which the to-be-detected data is located. The local density value may be calculated by using a local outlier factor (local outlier factor, LOF) algorithm.

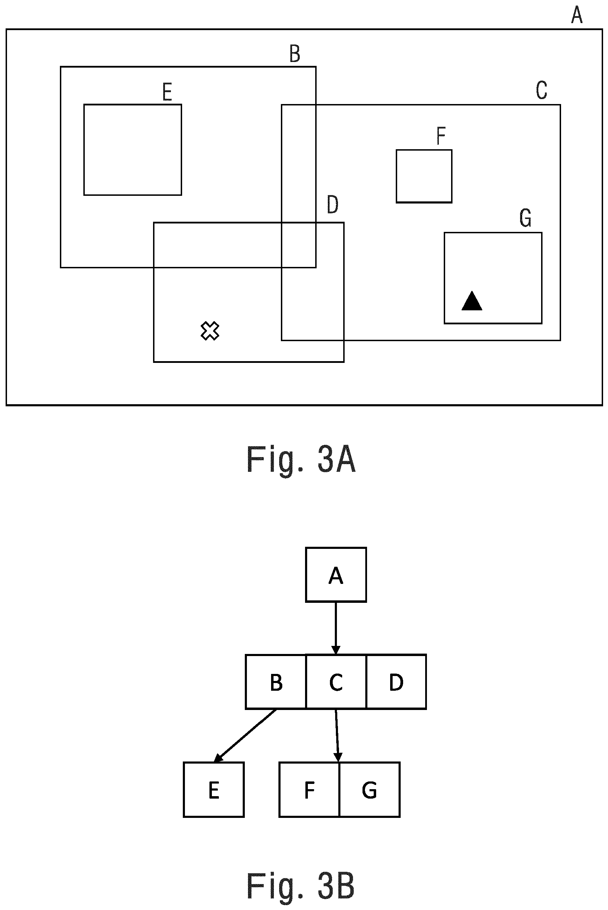

In some embodiments, the calculating a separation difficulty value and a local density value of the to-be-detected data based on historical data and the to-be-detected data includes: calculating the separation difficulty value of the to-be-detected data based on the historical data and the to-be-detected data by using an R-tree algorithm. FIG. 3A and FIG. 3B are schematic diagrams of calculating a separation difficulty value by using an R-tree algorithm according to an embodiment of the present invention. FIG. 3A is a schematic diagram of a data location, and FIG. 3B is a schematic diagram of a data hierarchical structure corresponding to FIG. 3A. As shown in FIG. 3A and FIG. 3B, data block A is at a first level, data blocks B, C, and D are at a second level, and data blocks E, F, and G are at a third level. A cross and a triangle represent to-be-detected data, the cross-shaped to-be-detected data and the triangle to-be-detected data respectively belong to data block D and data block G. When separation and locating are performed from data block A at the first level from top to bottom, data block D in which the cross-shaped to-be-detected data is located can be located by going down one level. Data block G in which the triangle to-be-detected data is located can be located only by going down two levels to the third level. Therefore, using the R-tree algorithm for calculation, the separation difficulty value of the cross-shaped to-be-detected data is 1, and the separation difficulty value of the triangle to-be-detected data is 2.

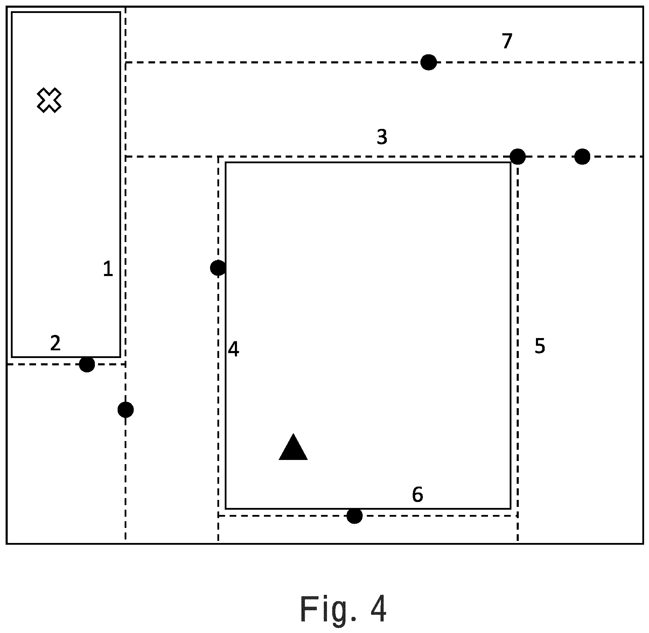

In some embodiments, the calculating a separation difficulty value and a local density value of the to-be-detected data based on historical data and the to-be-detected data includes: calculating the separation difficulty value of the to-be-detected data based on the historical data and the to-be-detected data by using a K-D tree algorithm. FIG. 4 is a schematic diagram of calculating a separation difficulty value by using a K-D tree algorithm according to an embodiment of the present invention. In FIG. 4, a point represents historical data, and a cross and a triangle represent to-be-detected data. The cross-shaped to-be-detected data can be separated from other data along dotted line 1 and dotted line 2. Therefore, a separation difficulty value of the cross-shape to-be-detected data calculated by using the K-D tree algorithm is 2. The triangle to-be-detected data can be separated from other data along dotted line 1 and dotted line 2 until dotted line 6. Therefore, a separation difficulty value of the triangle to-be-detected data calculated by using the K-D tree algorithm is 6.

It may be understood that for a group of to-be-detected data, the same algorithm is used to calculate the separation difficulty value. For example, one of the R-tree algorithm and the K-D tree algorithm is selected to unify a calculation standard.

In some embodiments, the local density value of the to-be-detected data is calculated based on the historical data and the to-be-detected data by using the following formula:

$$ld(o) = {}^1\!/_{d(o,\, M(X))}$$

where $ld(o)$ represents the local density value of the to-be-detected data, $M(X)$ represents the centroid of all data in a local area X, and $d(o, M(X))$ represents the distance between the to-be-detected data and the centroid.

As shown in FIG. 3A, the triangle to-be-detected data is used as an example. The triangle to-be-detected data is located in data block G, and a local area may be determined as data block G. First, the centroid of data block G is calculated, then the distance between the triangle to-be-detected data and the centroid of data block G is calculated, and finally the local density value of the triangle to-be-detected data can be obtained by calculating a reciprocal of the distance. A larger local density value indicates that data in the region in which the to-be-detected data is located is denser, and vice versa.

Step 130: Calculate an abnormality index value of the to-be-detected data based on the separation difficulty value and the local density value.

The separation difficulty value and the local density value are calculated in the foregoing step. In this step, the abnormality index value of the to-be-detected data is calculated based on the separation difficulty value and the local density value. It may be understood that the separation difficulty value and the local density value are negatively correlated with the abnormality index value, that is, the larger the separation difficulty value and the local density value are, the smaller the abnormality index value is. That is, the more difficult the to-be-detected data is to be separated from the historical data, or the larger the local area density is, the lower the possibility that the to-be-detected data is novelty data; otherwise, the higher the possibility that the to-be-detected data is novelty data. In this embodiment of the present invention, the abnormality index value of the to-be-detected data is calculated based on the separation difficulty value and the local density value, thereby implementing quantization of the abnormality index value.

In some embodiments, the separation difficulty value and the local density value are respectively negatively correlated with the abnormality index value. That is, when the separation difficulty value is negatively correlated with the abnormality index value, the local density value is also negatively correlated with the abnormality index value.

In some embodiments, the abnormality index value of the to-be-detected data is calculated based on the separation difficulty value and the local density value by using the following formula:

$$f(se, ld) = a^{-se*ld/c}$$

where $f(se, ld)$ represents the abnormality index value of the to-be-detected data, se represents the separation difficulty value, ld represents the local density value, a and c are two constants, a>1, and c>0.

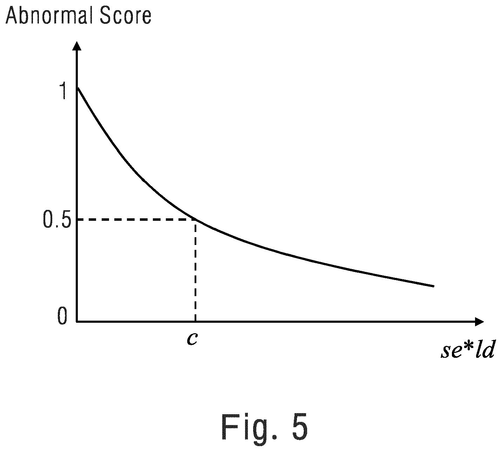

FIG. 5 is a schematic diagram of a calculation function of an abnormality index value according to an embodiment of the present invention. In FIG. 5, a horizontal coordinate represents a product of a separation difficulty value and a local density value, and a vertical coordinate represents an abnormality index value. It can be learned from FIG. 5 that a larger product of a separation difficulty value and a local density value indicates a smaller abnormality index value.

Step 140: Determine, based on the abnormality index value, whether the to-be-detected data is novelty data.

After the abnormality index value is calculated, whether the to-be-detected data is novelty data is determined based on the abnormality index value in this step. Whether the to-be-detected data is novelty data can be used as a basis for predictive maintenance before a fault occurs in industrial equipment, so as to avoid a fault and improve stability of the industrial equipment and the production line.

In some embodiments, the determining, based on the abnormality index value, whether the to-be-detected data is novelty data includes: determining an abnormality threshold, and when the abnormality index value of the to-be-detected data is greater than the abnormality threshold, determining that the to-be-detected data is novelty data. The abnormality threshold may be determined by a user input. For example, if a user inputs an abnormality threshold 0.8 by using a human-machine interface, the to-be-detected data is novelty data when the abnormality index value of the to-be-detected data is greater than 0.8; otherwise, the to-be-detected data is not novelty data. For another example, the user may also adjust the abnormality threshold to be 0.9 by using the human-machine interface, and the to-be-detected data is novelty data when the abnormality index value of the to-be-detected data is greater than 0.9; otherwise, the to-be-detected data is not novelty data. The abnormality threshold may also be set automatically by a system, for example, the abnormality threshold is set to 0.8 by default during system design.

This embodiment of the present invention provides the data novelty detection method. The abnormality index value of the to-be-detected data is calculated by using the separation difficulty value and the local density value, and whether the to-be-detected data is novelty data is determined based on the abnormality index value, thereby simplifying an operation process and improving accuracy of novelty detection.

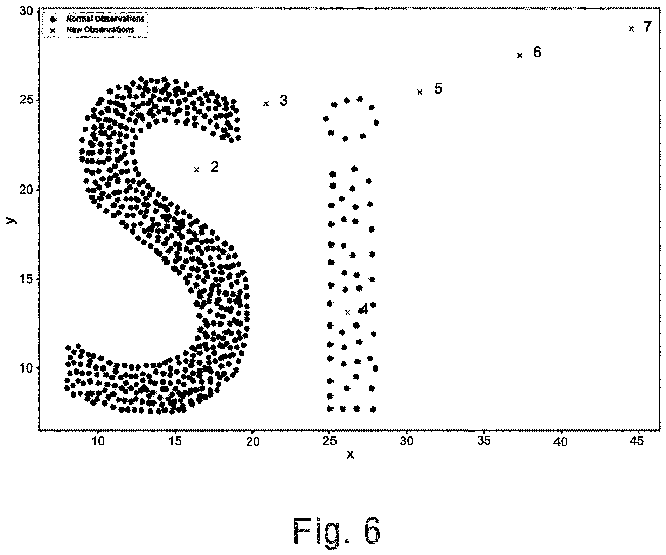

The following compares the data novelty detection method provided in the embodiment of the present invention with three methods in the prior art. FIG. 6 is a schematic diagram of result verification of a data novelty detection method according to an embodiment of the present invention. A circular point represents historical data, and a cross-shaped point represents to-be-detected data. A total of seven pieces of to-be-detected data can be obtained based on locations of the to-be-detected data.

Abnormality index value of to-be-detected data 1 < abnormality index value of to-be-detected data 4 < abnormality index value of to-be-detected data 2

Abnormality index value of to-be-detected data 1 < abnormality index value of to-be-detected data 4 < abnormality index value of to-be-detected data 3

Abnormality index value of to-be-detected data 1 < abnormality index value of to-be-detected data 4 < abnormality index value of to-be-detected data 5 < abnormality index value of to-be-detected data 6 < abnormality index value of to-be-detected data 7

Next, the abnormality values of the seven pieces of to-be-detected data are separately calculated by using three existing methods, and results obtained are shown in the following table. In this embodiment of the present invention, a K-D tree algorithm and a local density value are used to calculate the abnormality index value.

Table 1 Verification results of different novelty detection methods

| Observation | Elliptic Envelope | Isolation Forest | Local Outlier Factor | Our Proposal |
|---|---|---|---|---|
| 1 | 1.742 | 0.469 | 0.996 | 0.272 |
| 2 | 1.501 | 0.519 | 3.631 | 0.761 |
| 3 | 11.840 | 0.568 | 3.524 | 0.760 |
| 4 | 12.705 | 0.604 | 1.009 | 0.357 |
| 5 | 50.283 | 0.699 | 1.815 | 0.712 |
| 6 | 95.512 | 0.717 | 4.898 | 0.882 |
| 7 | 159.709 | 0.717 | 8.260 | 0.928 |

For the Elliptic Envelope method, the abnormality index value of to-be-detected data 1 is greater than the abnormality index value of to-be-detected data 4, and the abnormality index value of to-be-detected data 4 is greater than the abnormality index value of to-be-detected data 3. That is, a false decision clearly occurs.

For the Isolation Forest method, the abnormality index values of to-be-detected data 2 and to-be-detected data 3 are less than the abnormality index value of to-be-detected data 4, and to-be-detected data 6 and to-be-detected data 7 have the same abnormality index value. That is, a false decision also occurs.

For the Local Outlier Factor method, to-be-detected data 1 and to-be-detected data 4 have close abnormality index values, and the abnormality of to-be-detected data 1 and to-be-detected data 4 cannot be distinguished.

In contrast, the method in the embodiment of the present invention clearly conforms to the foregoing rule, and has higher accuracy and precision.

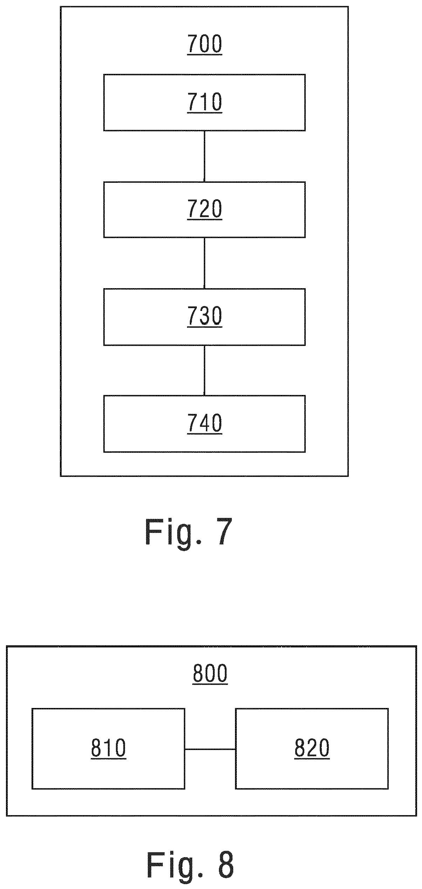

FIG. 7 is a schematic diagram of a data novelty detection apparatus 700 according to an embodiment of the present invention. As shown in FIG. 7, the novelty detection apparatus 700 includes:

a receiving module 710, configured to receive to-be-detected data;

a first calculation module 720, configured to calculate a separation difficulty value and a local density value of the to-be-detected data based on historical data and the to-be-detected data;

a second calculation module 730, configured to calculate an abnormality index value of the to-be-detected data based on the separation difficulty value and the local density value; and

a determining module 740, configured to determine, based on the abnormality index value, whether the to-be-detected data is novelty data.

In some embodiments, that the first calculation module 720 calculates the separation difficulty value of the to-be-detected data based on the historical data and the to-be-detected data includes: calculating the separation difficulty value of the to-be-detected data based on the historical data and the to-be-detected data by using an R-tree algorithm.

In some embodiments, that the first calculation module 720 calculates the separation difficulty value of the to-be-detected data based on the historical data and the to-be-detected data includes: calculating the separation difficulty value of the to-be-detected data based on the historical data and the to-be-detected data by using a K-D tree algorithm.

In some embodiments, the first calculation module 720 calculates the local density value of the to-be-detected data based on the historical data and the to-be-detected data by using the following formula:

$$ld(o) = {}^{1}\!/\!{}_{d(o,\,M(X))}$$

where $ld(o)$ represents the local density value of the to-be-detected data, $M(X)$ represents the centroid of all data in a local area X, and $d(o, M(X))$ represents the distance between the to-be-detected data and the centroid.

In some embodiments, the separation difficulty value and the local density value are respectively negatively correlated with the abnormality index value.

In some embodiments, the second calculation module 730 calculates the abnormality index value of the to-be-detected data based on the separation difficulty value and the local density value by using the following formula:

$$f(se, ld) = a^{-se*ld/c}$$

where $f(se,ld)$ represents the abnormality index value of the to-be-detected data, se represents the separation difficulty value, ld represents the local density value, a and c are two constants, a>1, and c>0.

In some embodiments, that the determining module 740 determines, based on the abnormality index value, whether the to-be-detected data is novelty data includes: determining an abnormality threshold, and when the abnormality index value of the to-be-detected data is greater than the abnormality threshold, determining that the to-be-detected data is novelty data.

The present invention further provides an electronic device 800. FIG. 8 is a schematic diagram of an electronic device 800 according to an embodiment of the present invention. As shown in FIG. 8, the electronic device 800 includes a processor 810 and a memory 820. The memory 820 stores an instruction, and the instruction is executed by the processor 810 to implement the method 100.

The present invention also provides a computer readable storage medium, having computer instructions stored thereon, where the computer instructions, when executed, implement the foregoing method 100.

Some aspects of the method and apparatus of the present invention may be entirely executed by hardware, may be entirely executed by software (including firmware, resident software, microcode, and the like), or may be executed by a combination of hardware and software. The foregoing hardware or software may be referred to as "data block", "module", "engine", "unit", "component" or "system". A processor may be one or more application specific integrated circuits (ASIC), digital signal processors (DSP), digital signal processing devices (DSPD), programmable logic devices (PLD), field programmable gate arrays (FPGA), processors, controllers, microcontrollers, microprocessors, or a combination thereof. In addition, various aspects of the present invention may be embodied as computer products located in one or more computer-readable media, the product including a computer-readable program code. For example, the computer-readable medium may include, but is not limited to, a magnetic storage device (for example, a hard disk, a floppy disk, a magnetic tape ...), an optical disk (for example, a compact disk (CD), a digital versatile disk (DVD), ...), a smart card, and a flash memory device (for example, a card, a stick, a key driver, ...).

The flow diagram is used to be configured to describe operations performed by the method according to the embodiment of the present application herein. It should be understood that the foregoing operations may not be performed accurately according to the order. On the contrary, the operations may be performed in a reverse order or simultaneously. At the same time, or other operations are added into these processes, or one or multiple operations are removed from these processes.

It should be understood that, although this specification is described according to each embodiment, each embodiment may not include only one independent technical solution. The description manner of this specification is merely for clarity. This specification should be considered as a whole by a person skilled in the art, and the technical solution in each embodiment may also be properly combined, to form other implementations that can be understood by the person skilled in the art.

The foregoing are merely specific schematic implementations of the present invention, and are not intended to limit the scope of the present invention. Any equivalent change, modification, and combination made by the person skilled in the art without departing from the conception and principles of the present invention should all fall within the protection scope of the present invention.

**Claims**

1. A data novelty detection method (100), wherein the method (100) comprises:

   receiving to-be-detected data (110);
   calculating a separation difficulty value and a local density value of the to-be-detected data based on historical data and the to-be-detected data (120);
   calculating an abnormality index value of the to-be-detected data based on the separation difficulty value and the local density value (130); and
   determining, based on the abnormality index value, whether the to-be-detected data is novelty data (140).

2. The method (100) according to claim 1, wherein the calculating a separation difficulty value and a local density value of the to-be-detected data based on historical data and the to-be-detected data comprises: calculating the separation difficulty value of the to-be-detected data based on the historical data and the to-be-detected data by using an R-tree algorithm.

3. The method (100) according to claim 1, wherein the calculating a separation difficulty value and a local density value of the to-be-detected data based on historical data and the to-be-detected data comprises: calculating the separation difficulty value of the to-be-detected data based on the historical data and the to-be-detected data by using a K-D tree algorithm.

4. The method (100) according to any one of claims 1 to 3, wherein the local density value of the to-be-detected data is calculated based on the historical data and the to-be-detected data by using the following formula:

$$ld(o) = {1}/{d(o, M(X))}$$

   wherein $ld(o)$ represents the local density value of the to-be-detected data, $M(X)$ represents the centroid of all data in a local area X, and $d(o, M(X))$ represents the distance between the to-be-detected data and the centroid.

5. The method (100) according to claim 1, wherein the separation difficulty value and the local density value are respectively negatively correlated with the abnormality index value.

6. The method (100) according to claim 5, wherein the abnormality index value of the to-be-detected data is calculated based on the separation difficulty value and the local density value by using the following formula:

$$f(se, ld) = a^{-se*ld/c}$$

wherein *f(se,ld)* represents the abnormality index value of the to-be-detected data, se represents the separation difficulty value, ld represents the local density value, a and c are two constants, a>1, and c>0.

7.  The method (100) according to claim 1, wherein the determining, based on the abnormality index value, whether the to-be-detected data is novelty data comprises: determining an abnormality threshold, and when the abnormality index value of the to-be-detected data is greater than the abnormality threshold, determining that the to-be-detected data is novelty data.

8.  A data novelty detection apparatus (700), wherein the apparatus (700) comprises:

    a receiving module (710), configured to receive to-be-detected data;
    a first calculation module (720), configured to calculate a separation difficulty value and a local density value of the to-be-detected data based on historical data and the to-be-detected data;
    a second calculation module (730), configured to calculate an abnormality index value of the to-be-detected data based on the separation difficulty value and the local density value; and
    a determining module (740), configured to determine, based on the abnormality index value, whether the to-be-detected data is novelty data.

9.  The apparatus (700) according to claim 8, wherein that the first calculation module (720) calculates the separation difficulty value of the to-be-detected data based on the historical data and the to-be-detected data comprises: calculating the separation difficulty value of the to-be-detected data based on the historical data and the to-be-detected data by using an R-tree algorithm.

10. The apparatus (700) according to claim 8, wherein that the first calculation module (720) calculates the separation difficulty value of the to-be-detected data based on the historical data and the to-be-detected data comprises: calculating the separation difficulty value of the to-be-detected data based on the historical data and the to-be-detected data by using a K-D tree algorithm.

11. The apparatus (700) according to any one of claims 8 to 10, wherein the first calculation module (720) calculates the local density value of the to-be-detected data based on the historical data and the to-be-detected data by using the following formula:

$$ld(o) = {}^{1}\!/\!{d(o, M(X))}$$

wherein *ld(o)* represents the local density value of the to-be-detected data, *M(X)* represents the centroid of all data in a local area X, and *d(o, M(X))* represents the distance between the to-be-detected data and the centroid.

12. The apparatus (700) according to claim 8, wherein the separation difficulty value and the local density value are respectively negatively correlated with the abnormality index value.

13. The apparatus (700) according to claim 12, wherein the second calculation module (730) calculates the abnormality index value of the to-be-detected data based on the separation difficulty value and the local density value by using the following formula:

$$f(se, ld) = a^{-se*ld/c}$$

wherein *f(se,ld)* represents the abnormality index value of the to-be-detected data, se represents the separation difficulty value, ld represents the local density value, a and c are two constants, a>1, and c>0.

14. The apparatus (700) according to claim 8, wherein that the determining module (740) determines, based on the abnormality index value, whether the to-be-detected data is novelty data comprises: determining an abnormality threshold, and when the abnormality index value of the to-be-detected data is greater than the abnormality threshold, determining that the to-be-detected data is novelty data.

15. An electronic device (800), comprising a processor (810), a memory (820), and an instruction stored in the memory (820), wherein the instruction is executed by the processor (810) to implement the method according to any one of claims 1 to 7.

16. A computer readable storage medium, having computer instructions stored thereon, wherein the computer instructions, when executed, implement the method according to any one of claims 1 to 7.

100

110

120

130

140

Fig. 1

Fig. 2

Fig. 3A

Fig. 3B

Fig. 4

Fig. 5

Fig. 6

700

710

720

730

740

# Fig. 7

800

810

820

# Fig. 8

Europäisches
Patentamt

European
Patent Office

Office européen
des brevets

# EUROPEAN SEARCH REPORT

Application Number

EP 21 16 5987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/271587 A1 (SHIBUYA HISAE [JP] ET AL) 25 October 2012 (2012-10-25) * paragraphs [0001], [0012] - [0020], [0034] - [0043], [0054] - [0060], [0076], [0077], [0084]; figures 1-13 * ----- | 1-16 | INV. G05B23/02 |
| X | US 2014/195184 A1 (MAEDA SHUNJI [JP] ET AL) 10 July 2014 (2014-07-10) * abstract * * paragraphs [0080] - [0085], [0098] - [0106], [0125], [0126], [0166] - [0170]; figures 1-21B * ----- | 1-15 | |
| A | DASH M ET AL: "'1+1>2': merging distance and density based clustering", DATABASE SYSTEMS FOR ADVANCED APPLICATIONS, 2001. PROCEEDINGS. SEVENTH INTERNATIONAL CONFERENCE ON APRIL 18-21, 2001, PISCATAWAY, NJ, USA,IEEE, 21 April 2001 (2001-04-21), pages 32-39, XP031977600, DOI: 10.1109/DASFAA.2001.916361 ISBN: 978-0-7695-0996-9 * abstract * ----- | 1-15 | |
| | | | TECHNICAL FIELDS SEARCHED (IPC) |
| | | | G05B |

The present search report has been drawn up for all claims

| Place of search | Date of completion of the search | Examiner |
|---|---|---|
| Munich | 3 August 2021 | Barriuso Poy, Alex |

EPO FORM 1503 03.82 (P04C01)

## ANNEX TO THE EUROPEAN SEARCH REPORT
## ON EUROPEAN PATENT APPLICATION NO.

EP 21 16 5987

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2021

| Patent document cited in search report | | Publication date | Patent family member(s) | | Publication date |
|---|---|---|---|---|---|
| US 2012271587 | A1 | 25-10-2012 | JP | 5364530 B2 | 11-12-2013 |
| | | | JP | 2011081697 A | 21-04-2011 |
| | | | US | 2012271587 A1 | 25-10-2012 |
| | | | WO | 2011043108 A1 | 14-04-2011 |
| US 2014195184 | A1 | 10-07-2014 | JP | 5808605 B2 | 10-11-2015 |
| | | | JP | 2013041448 A | 28-02-2013 |
| | | | US | 2014195184 A1 | 10-07-2014 |
| | | | WO | 2013024613 A1 | 21-02-2013 |

EPO FORM P0459

For more details about this annex : see Official Journal of the European Patent Office, No. 12/82